# EUROPÄISCHE PATENTSCHRIFT

(11) **EP 1 651 484 B1**
(45) Veröffentlichungstag und Bekanntmachung des Hinweises auf die Patenterteilung: **03.12.2008**
(21) Anmeldenummer: 04766159.0
(22) Anmeldetag: 08.07.2004
(51) Int. Cl.: B60T 8/00, B60T 13/66

(54) **VERFAHREN ZUR BERWACHUNG EINER ELEKTROHYDRAULISCHEN BREMSAN ALAGE**
METHOD FOR MONITORING A HYDRO-ELECTRICAL BRAKE SYSTEM
PROCEDE POUR SURVEILLER UN SYSTEME DE FREINAGE ELECTROHYDRAULIQUE

(30) Priorität: 08.07.2003 DE 10330663
(43) Veröffentlichungstag der Anmeldung: 03.05.2006
(73) Patentinhaber: Continental Teves AG & Co. oHG, 60488 Frankfurt (DE)
(72) Erfinder: ULLRICH, Thorsten, 64579 Gernsheim (DE); FEICK, Stefan, 6729 Kirchheimbolanden (DE); LERCHENBERGER, Jens, 38690 Vienenburg (DE)
(86) Internationale Anmeldenummer: PCT/EP2004/051410
(87) Internationale Veröffentlichungsnummer: WO 2005/005213

(56) Entgegenhaltungen:
- EP-A- 0 477 519
- WO-A-99/41125
- US-A- 5 265 468
- US-A- 5 499 866
- US-A- 5 908 983

## Beschreibung

Die Erfindung betrifft ein Verfahren zur Überwachung einer elektrohydraulischen Bremsanlage nach dem Oberbegriff des Patentanspruchs 1.

Eine derartige Bremsanlage ist. Z. B. aus der internationalen Patenanmeldung der Anmelderin WO 99/41125 bekannt. Bei elektrohydraulischen Bremssystemen dieser Art besteht die Notwendigkeit, insbesondere im Rahmen von Selbsttests und Systemkalibrierungen bei Fahrzeugstillstand, aktiv Radbremsdrücke einzustellen, ohne dass der Fahrer das Bremspedal betätigt. Beispiele dafür sind der sog. Pre-Drive-Check, der vor Fahrtantritt beim Aktivieren des Bremssystems (Wake-Up z. B. per Fernbedienung der Zentralverriegelung oder Türkontakt), oder Spül- und Kalibrierroutinen, die nach dem Ausschalten der Zündung ablaufen.

WO99/41125 offenbart ein Bremssystem eines Fahrzeuges mit einer elektrohydraulischen Bremsanlage für Kraftfahrzeuge, mit einem mittels eines Bremspedals betätigbaren Hauptbremszylinder

Der aktive Druckaufbau im Stillstand ohne Pedalbetätigung stellt ein Gefährdungspotential dar, wenn gleichzeitig Wartungsarbeiten an der Bremsanlage vorgenommen werden (Einklemmgefahr). Zwar kann der juristische Aspekt (Produkthaftung) hierbei durch Warnhinweise z. B. im Fahrzeughandbuch und in den Werkstattanweisungen abgedeckt werden, dennoch ist es wünschenswert, dass das System über Eigenintelligenz verfügt, um zumindest schwerwiegende Verletzungen des Werkstattpersonals auszuschließen.

Es ist daher Aufgabe der vorliegenden Erfindung, ein geeignetes Verfahren zur Überwachung des o. g. Bremssystems vorzuschlagen, durch dessen Durchführung die Verletzungsrisiken eliminiert werden.

Diese Aufgabe wird erfindungsgemäß durch die folgenden Verfahrensschritte gelöst:
- Deaktivieren einer dem Hochdruckspeicher-Ladevorgang zugeordneten, durch die elektronische Steuer- und Regeleinheit durchzuführenden elektronischen Regelung;
- Schließen des einer Fahrzeugachse zugeordneten Trennventils,
- Öffnen der der Fahrzeugachse zugeordneten Einlassventile zum Zweck einer Verschiebung von Druckmittelvolumen in die Radbremsen der Fahrzeugachse bei gleichzeitigem Ermitteln von Werten, die den in den Radbremsen eingesteuerten hydraulischen Druck sowie die Verschiebung von Druckmittelvolumen repräsentieren; und
- Auswerten der Werte zur Beurteilung des Zustandes der Radbremsen.

Nach einem vorteilhaften Merkmal des erfindungsgemäßen Verfahrens ist vorgesehen, dass die Verschiebung von Druckmittelvolumen in die Radbremsen bei geladenem Hochdruckspeicher erfolgt, indem die den Radbremsen vorgeschalteten Einlassventile teilweise geöffnet werden und die Abnahme des im Hochdruckspeicher enthaltenen Druckmittelvolumens als Maß für die Verschiebung von Druckmittelvolumen in die Radbremsen herangezogen wird.

Eine alternative Ausprägung des erfindungsgemäßen Verfahrens besteht darin, dass die Verschiebung von Druckmittelvolumen in die Radbremsen bei entladenem Hochdruckspeicher durch Ansteuerung der Pumpe erfolgt, wobei die den Radbremsen vorgeschalteten Einlassventile vollständig geöffnet werden und das Maß für die Verschiebung von Druckmittelvolumen in die Radbremsen durch numerische Integration des Pumpenvolumenstroms gebildet wird.

Ein weiteres vorteilhaftes Merkmal des erfindungsgemäßen Verfahrens besteht darin, dass die Werte, die den hydraulischen Druck sowie die Verschiebung von Druckmittelvolumen repräsentieren, mit vorher festgelegten Schwellwerten verglichen werden und die Ergebnisse des Vergleichs einer zeitlichen Druck/Volumen-Korrelation unterworfen werden.

Eine andere vorteilhafte Weiterbildung des erfindungsgemäßen Verfahrens besteht darin, dass bei einer Steigerung des in den Radbremsen eingesteuerten hydraulischen Druckes über den vorher festgelegten Schwellwert, bei der das Maß für die Verschiebung von Druckmittelvolumen den dem Volumen zugeordneten Schwellwert nicht erreicht, auf einen Zustand geschlossen wird, in dem die Reibelemente der Radbremsen an die ihnen zugeordneten Reibflächen angelegt werden.

Eine weitere vorteilhafte Weiterbildung besteht darin, dass wenn das Maß der Verschiebung von Druckmittelvolumen den (Volumen-) Schwellwert überschreitet und der in den Radbremsen eingesteuerte hydraulische Druck den (Druck-)Schwellwert nicht erreicht, auf einen unzulässigen Verfahrweg von in den Radbremsen vorhandenen Kolben geschlossen wird, bei dem bei Wartungsarbeiten an den Radbremsen eine Gefährdung des Wartungspersonals droht.

Nach einem anderen vorteilhaften Merkmal des erfindungsgemäßen Verfahrens erfolgt schließlich beim Erkennen des unzulässigen Verfahrweges der Kolben eine optische oder eine akustische Warnung.

Die Erfindung wird in der nachfolgenden Beschreibung eines Ausführungsbeispiels unter Bezugnahme auf die beiliegende Zeichnung näher erläutert. In der Zeichnung zeigt:
- Fig. 1: eine schematische Darstellung einer elektrohydraulischen Bremsanlage, bei der das erfindungsgemäße Verfahren durchgeführt werden kann,
- Fig. 2: ein Flussdiagramm, das den Ablauf des erfindungsgemäßen Verfahrens darstellt,
- Fig. 3: eine erste, während des erfindungsgemäßen Verfahrens durchzuführende Druck/Volumen-Korrelation und
- Fig. 4: eine zweite, während des erfindungsgemäßen Verfahrens durchzuführende Druck/Volumen-Korrelation.

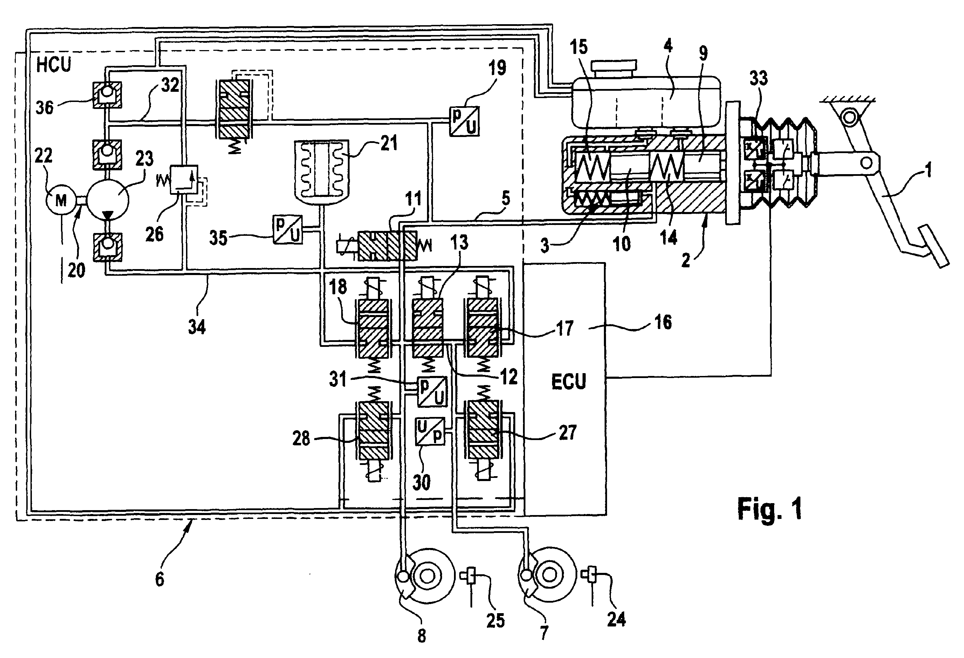

Die in Fig. 1 lediglich schematisch dargestellte Bremsanlage besteht im wesentlichen aus einem mittels eines Bremspedals 1 betätigbaren, zweikreisigen hydraulischen Druckerzeuger bzw. Hauptbremszylinder 2 in Tandemausführung, einem mit dem Tandemhauptzylinder 2 zusammenwirkenden Wegsimulator 3, einem dem Tandemhauptzylinder 2 zugeordneten Druckmittelvorratsbehälter 4, einer hydraulischen Druckquelle, einer lediglich schematisch angedeuteten Steuereinheit HCU 6, die u.a. sämtliche, für Druckregelvorgänge erforderlichen Komponenten enthält und an die beispielsweise der Hinterachse des Kraftfahrzeugs zugeordnete Radbremsen 7, 8 angeschlossen sind, sowie einer elektronischen Steuer- und Regeleinheit ECU 16. Zur Ermittlung der Drehzahl der Fahrzeugräder dienen lediglich angedeutete Radsensoren 24, 25. Der an sich bekannte Tandemhauptzylinder 2 weist durch zwei Kolben 9, 10, begrenzte, voneinander getrennte Druckräume 14, 15 auf, die sowohl mit dem Druckmittelvorratsbehälter 4 als auch über die HCU 6 mit den Fahrzeugbremsen 7, 8, -, - verbindbar sind. Der andere Bremskreis, an den die Radbremsen angeschlossen sind, die der Vorderachse zugeordnet sind, ist nicht dargestellt. Die vorhin erwähnte Druckquelle wird durch einen Hochdruckspeicher 21 gebildet, der mittels einer Pumpe 23 eines Motor-Pumpenaggregats 20 aufgeladen wird. Die Pumpe 23 wird von einem Elektromotor 22 angetrieben, wobei der Ausgangsdruck der Pumpe 23 durch ein der Pumpe 23 parallel geschaltetes Druckbegrenzungsventil 26 begrenzt wird. Der von dem Hochdruckspeicher 21 bereit gestellte hydraulische Druck wird von einem Drucksensor 35 überwacht.

Wie weiterhin Fig. 1 zu entnehmen ist, sind die Radbremsen 7, 8 an den ersten Druckraum 14 mittels einer Leitung 5 angeschlossen, in der ein Trennventil 11 eingefügt ist, das als stromlos offenes (SO-) 2/2-Wegeventil ausgeführt ist und ein Absperren des ersten Druckraums 14 ermöglicht. Eine zweite hydraulische Leitung 34 verbindet die Druckseite der Pumpe 23 bzw. den Hochdruckspeicher 21 mit den Eingangsanschlüssen von zwei elektromagnetisch betätigbaren, analog regelbaren, vorzugsweise stromlos geschlossenen (SG-) 2/2-Wegeventilen bzw. Einlassventilen 17, 18, die den Radbremsen 7 und 8 vorgeschaltet sind. Ein weiteres Paar von ebenfalls elektromagnetisch betätigbaren, analog regelbaren, vorzugsweise stromlos geschlossenen (SG-) 2/2-Wegeventilen bzw. Auslassventilen 27, 28 ermöglicht eine Verbindung der Radbremse 7, 8 mit dem Druckmittelvorratsbehälter 4, während ein elektromagnetisch betätigbares, vorzugsweise stromlos offenes (SO-) Druckausgleichsventil 13 eine radindividuelle Regelung der in den Radbremsen 7, 8 eingesteuerten Drücke ermöglicht.

Außerdem sind den Radbremsen 7, 8 Drucksensoren 30, 31 zugeordnet, mit deren Hilfe der in den Radbremsen 7, 8 herrschende hydraulische Druck ermittelt wird. Die vorhin erwähnte elektronische Regel- und Steuereinheit ECU 16, der die Ausgangssignale der Drucksensoren 19, 30, 31, 35, der Raddrehzahlsensoren 24, 25, sowie einer vorzugsweise redundant ausgeführten Bremswunscherfassungseinrichtung 33 zugeführt werden, die dem Hauptbremszylinder 2 zugeordnet ist, dient der Ansteuerung des Motor-Pumpen-Aggregats 20 sowie der vorhin erwähnten Ventile 11, 13, 17, 18, 27, 28.

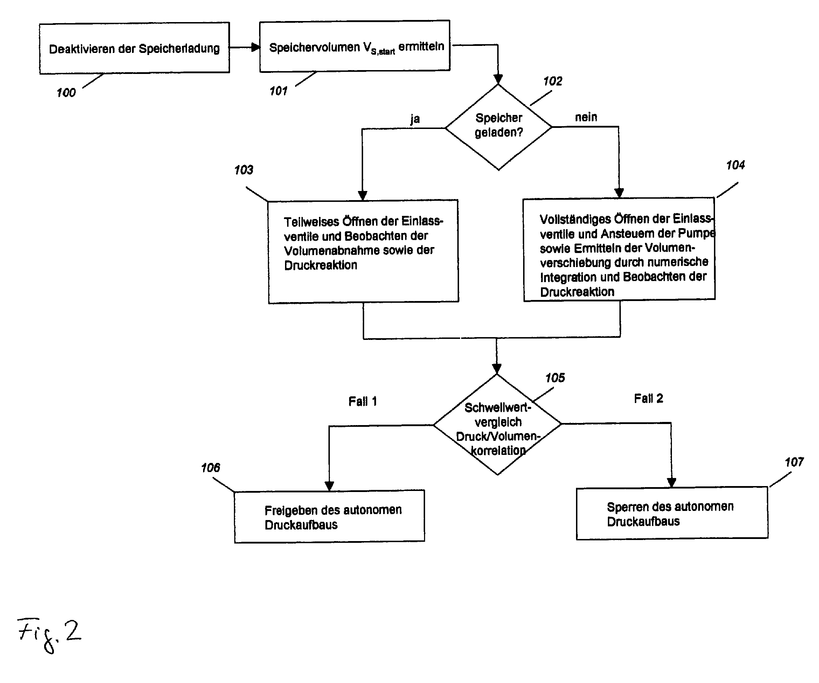

Wie bereits vorhin erwähnt wurde, besteht der Grundgedanke der Erfindung darin, vor einem aktiven Druckaufbau einen unzulässig langen Verfahrweg der Radbremskolben zu detektieren. Ein extrem weit zurück geschobener Radbremskolben ist ein Indikator für Wartungsarbeiten an der Bremsanlage. Dabei ist es nur bei einer solchen extremen Bremskolbenposition möglich, dass sich Finger einer an der Radbremse arbeitenden Person zwischen Bremsbelag und -scheibe befinden. Aus dem in Fig. 2 gezeigten Flussdiagramm geht hervor, dass bei der Durchführung des erfindungsgemäßen Verfahrens der Ladevorgang des Hochdruckspeichers 21 (Verfahrensschritt 100) deaktiviert wird, wonach in einem zweiten Verfahrenschritt 101 das Druckmittelvolumen V_{S,start} des Hochdruckspeichers 21 ermittelt wird. Danach wird in einem dritten Verfahrensschritt (102) festgestellt, ob der Hochdruckspeicher 21 ge- oder entladen ist. Bei geladenem Hochdruckspeicher 21 erfolgt die Verschiebung von Druckmittel in die Radbremsen 7, 8 durch teilweises Öffnen der den Radbremsen 7, 8 vorgeschalteten Einlassventile 17, 18 im Verfahrenschritt 103. Hierbei dient die Abnahme des im Hochdruckspeichers 21 enthaltenen Druckmittelvolumens als Maß für die Verschiebung von Druckmittel in die Radbnremsen 7, 8.

Bei entladenem Hochdruckspeicher 21 erfolgt die Druckmittelvolumenverschiebung hingegen durch Ansteuern der Pumpe 23 und vollständiges Öffnen der den Radbremsen 7, 8 vorgeschalteten Einlassventile 17, 18 (Verfahrensschritt 104). In diesem Fall wird das Maß für die Druckmittelvolumenverschiebung durch numerische Integration des Pumpenvolumenstroms gewonnen.

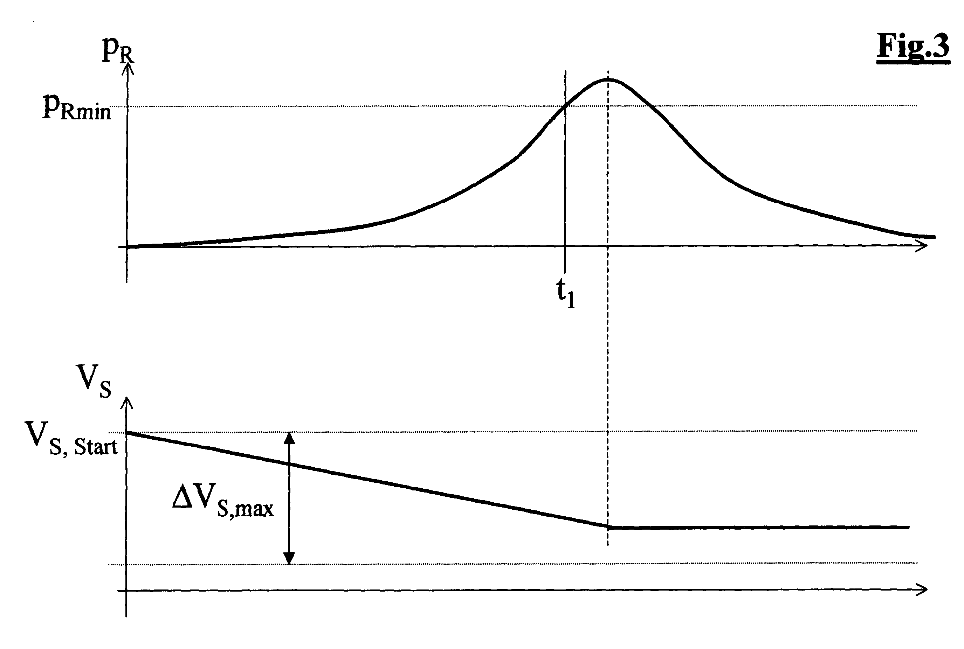

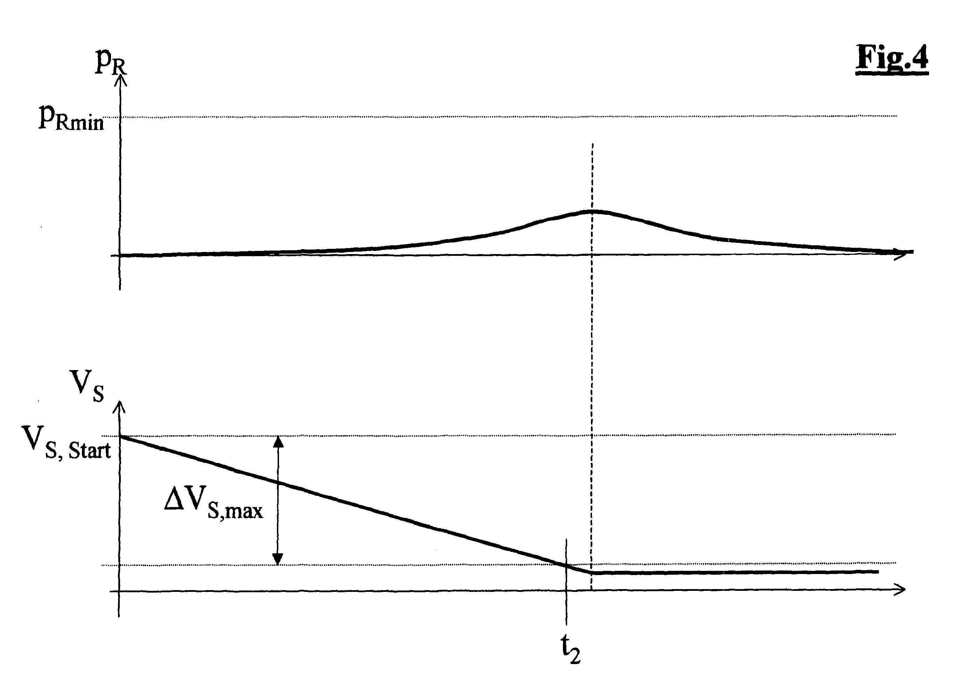

Bei dieser Prozedur steigt der Druck p_{R} in den Radbremsen 7, 8 an, während das Maß der Druckmittelvolumenverschiebung zunimmt. Im Verfahrensschritt 105 werden diese Signale mit vorher festgelegten Schwellwerten p_{R,min}, ΔV_{S,max} verglichen und einer zeitlichen Korrelation unterworfen. Wie das Flussdiagramm erkennen lässt, sind zwei Ergebnisse dieses Vergleichs denkbar, die in Fig. 3 und 4 für den Fall der Druckmittelvolumenverschiebung aus dem Hochdruckspeicher 21 dargestellt sind:
1. Wenn der in den Radbremsen 7, 8 eingesteuerte hydraulische Druck über den vorher festgelegten Schwellwert (p_{Rmin}) zum Zeitpunkt t₁ (Fig. 3) steigt, ohne dass das die Abnahme des im Hochdruckspeicher 21 enthaltenen Druckmittelvolumens den (Volumenabnahme-)Schwellwert ΔV_{S,max} erreicht, wird auf einen Zustand geschlossen, in dem die Reibelemente der Radbremsen 7, 8 an die ihnen zugeordneten Reibflächen angelegt werden. In diesem Fall kann ein aktiver Aufbau des in den Radbremsen 7, 8 eingesteuerten hydraulischen Druckes ohne Gefahr durchgeführt werden ( s. Fig. 2 - Verfahrensschritt 106).
2. Wenn dagegen die Abnahme des im Hochdruckspeicher 21 enthaltenen Druckmittelvolumens zum Zeitpunkt t2 (Fig. 4) unter den (Volumenabnahme-)Schwellwert ΔV_{Smax} absinkt, ohne dass der in den Radbremsen 7, 8 eingesteuerte hydraulische Druck den (Druck-)Schwellwert P_{Rmin} erreicht, wird auf einen unzulässigen Verfahrweg von in den Radbremsen 7, 8 vorhandenen Kolben geschlossen. In diesem Fall liegt eine extreme Position der Kolben vor, so dass die Gefahr einer Verletzung des die Wartungsarbeiten an den Radbremsen durchführenden Werkstattpersonals besteht. Ein aktiver Aufbau des in den Radbremsen 7, 8 eingesteuerten hydraulischen Druckes wird dann unterlassen (s. Fig. 2 - Verfahrenschritt 107) und zu einem späteren Zeitpunkt, (z. B. beim nächsten Systemstart), nachgeholt.

Die Festlegung des Volumenschwellwertes V_{Smax} erfolgt so, dass bei der gegebenen Genauigkeit der vorhandenen Sensorik zur Ermittlung der Volumenabnahme eine sichere Erkennung gewährleistet ist. Andererseits wird durch diesen Schwellwert der maximale Verfahrweg eines Radbremskolbens bis zur Erkennung der extremen Position definiert.

Während Kalibrierroutinen zur Optimierung der Systemeigenschaften oder der Systemrobustheit dienende Spülprozesse bei der Erkennung einer extremen Bremskolbenposition ohne schwerwiegende funktionale Einbußen auf einen späteren Zeitpunkt verschoben werden können, stellt sich für den sog. Pre-Drive-Check das folgende Problem: Fehlerzustände, wie Leckage oder das Vorhandensein großer Luft- bzw. Gasmengen in der Bremsanlage, die durch den Pre-Drive-Check erkannt werden sollen, stellen sich bezüglich der o.g. Signale genau so dar, wie eine extreme Bremskolbenposition. Es kann daher sinnvoll sein (Frage des Sicherheits- und Warnkonzeptes), bei der Erkennung einer extremen Bremskolbenposition vor dem Pre-Drive-Check zunächst von einem Systemfehler auszugehen und eine Fahrerwarnung (z. B. durch eine Warnlampe o. ä.) auszulösen. Zeigt sich bei nachfolgenden, vom Fahrer ausgelösten Bremsungen, dass die Bremsanlage intakt ist, so kann die Warnung zurück genommen werden.

## Patentansprüche

1. Verfahren zur Überwachung einer elektrohydraulischen Bremsanlage für Kraftfahrzeuge, mit einem mittels eines Bremspedals (1) betätigbaren Hauptbremszylinder (2), mit einem mit dem Bremspedal (1) zusammenwirkenden Simulator (3), mit mindestens einer durch eine elektronische Steuer- und Regeleinheit (16) ansteuerbaren Druckquelle, die durch einen mittels einer Pumpe (23) aufladbaren Hochdruckspeicher (21) gebildet ist und mit deren Druck Radbremsen (7, 8) des Fahrzeuges beaufschlagbar sind, die über mindestens eine mittels eines Trennventils (11) absperrbare hydraulische Verbindung (5) andererseits mit dem Hauptbremszylinder (2) verbindbar sind, mit einer Einrichtung (33) zur Erkennung des Fahrerverzögerungswunsches, sowie mit je einem den Radbremsen (7, 8) vorgeschalteten Einlassventil (17, 18) und einem Auslassventil (27, 28), **gekennzeichnet durch** die folgenden Verfahrensschritte:
Deaktivieren einer dem Hochdruckspeicher-Ladevorgang zugeordneten, **durch** die elektronische Steuer- und Regeleinheit (16) durchzuführenden elektronischen Regelung;
Schließen des einer Fahrzeugachse zugeordneten Trennventils (11),
Öffnen der der Fahrzeugachse zugeordneten Einlassventile (17, 18) zum Zweck einer Druckmittelvolumenverschiebung in die Radbremsen (7, 8) der Fahrzeugachse bei gleichzeitigem Ermitteln von Werten (p, ΔV), die den in den Radbremsen (7,8) eingesteuerten hydraulischen Druck sowie die Verschiebung von Druckmittel repräsentieren; und
Auswerten der Werte zur Beurteilung des Zustandes der Radbremsen (7, 8).

2. Verfahren nach Anspruch 1 **dadurch gekennzeichnet, dass** die Verschiebung von Druckmittel durch teilweises Öffnen der Einlassventile (17, 18) bei geladenem Hochdruckspeicher (21) erfolgt und dass als Maß für die Verschiebung von Druckmittel die Abnahme des im Hochdruckspeicher (21) enthaltenen Druckmittelvolumens herangezogen wird.

3. Verfahren nach Anspruch 1 **dadurch gekennzeichnet, dass**
die Verschiebung von Druckmittel in die Radbremsen bei entladenem Hochdruckspeicher durch Ansteuerung der Pumpe und vollständiges Öffnen der Einlassventile (17, 18) erfolgt.

4. Verfahren nach Anspruch 3 **dadurch gekennzeichnet, dass**
die Verschiebung von Druckmittel durch numerische Integration des Pumpenvolumenstroms innerhalb der elektronischen Steuereinheit approximiert wird.

5. Verfahren nach Anspruch 2 oder 3 **dadurch gekennzeichnet, dass** die Werte (p, ΔV), die den hydraulischen Druck sowie die Verschiebung von Druckmittelvolumen repräsentieren, mit vorher festgelegten Schwellwerten (P_{Rmin}, ΔV_{S,max}) verglichen werden und die Ergebnisse des Vergleichs einer zeitlichen Druck/Volumen-Korrelation unterworfen werden.

6. Verfahren nach Anspruch 5 **dadurch gekennzeichnet, dass** bei einer Steigerung des in den Radbremsen (7, 8) eingesteuerten hydraulischen Druckes über den vorher festgelegten Schwellwert (P_{Rmin}), bei der das Maß für die Verschiebung von Druckmittel den Schwellwert (ΔV_{S,max}) nicht erreicht, auf einen Zustand geschlossen wird, in dem die Reibelemente der Radbremsen (7, 8) an die ihnen zugeordneten Reibflächen angelegt sind.

7. Verfahren nach Anspruch 5 **dadurch gekennzeichnet, dass** wenn das Maß für die Verschiebung von Druckmittel den (Volumen-) Schwellwert (ΔV_{Smax}) überschreitet und der in den Radbremsen (7, 8) eingesteuerte hydraulische Druck den (Druck-) Schwellwert (p_{Rmin}) nicht erreicht, auf einen unzulässigen Verfahrweg von in den Radbremsen (7, 8) vorhandenen Kolben geschlossen wird, bei dem bei Wartungsarbeiten an den Radbremsen eine Gefährdung des Wartungspersonals droht.

8. Verfahren nach Anspruch 7 **dadurch gekennzeichnet, dass** beim Erkennen des unzulässigen Verfahrweges der Kolben eine optische oder eine akustische Warnung erfolgt.

## Claims

1. Method for monitoring an electrohydraulic brake system for motor vehicles, having a master brake cylinder (2) which can be actuated by means of a brake pedal (1), having a simulator (3) which interacts with the brake pedal (1), having at least one pressure source which can be activated by means of an electronic control and regulating unit (16) and which is formed by a high-pressure accumulator (21) which can be charged by means of a pump (23), with it being possible for wheel brakes (7, 8) of the vehicle to be acted on with the pressure of said pressure source, which wheel brakes (7, 8) can be connected at the other side to the master brake cylinder (2) by means of at least one hydraulic connection (5) which can be blocked by means of a block valve (11), having a device (33) for detecting the driver deceleration demand, and having in each case one inlet valve (17, 18) connected upstream of the wheel brakes (7, 8), and one outlet valve (27, 28), **characterized by** the following method steps:
deactivating electronic regulation which is assigned to the pressurization process of the high-pressure accumulator and which is to be carried out by the electronic control and regulating unit (16),
closing the block valve (11) assigned to a vehicle axle,
opening the inlet valves (17, 18) which are assigned to the vehicle axle in order to displace a pressure medium volume into the wheel brakes (7, 8) of the vehicle axle, while simultaneously determining values (p, ΔV) which represent the hydraulic pressure set in the wheel brakes (7, 8) and the displacement of pressure medium; and
evaluating the values in order to assess the state of the wheel brakes (7, 8).

2. Method according to Claim 1, **characterized in that** the displacement of pressure medium takes place by partially opening the inlet valves (17, 18) when the high-pressure accumulator (21) is charged, and **in that** the decrease in the pressure medium volume contained in the high-pressure accumulator (21) is taken into consideration as a measure for the displacement of pressure medium.

3. Method according to Claim 1, **characterized in that** the displacement of pressure medium into the wheel brakes takes place when the high-pressure accumulator is not charged by activating the pump and fully opening the inlet valves (17, 18).

4. Method according to Claim 3, **characterized in that** the displacement of pressure medium is approximated within the electronic control unit by numerical integration of the pump volume flow.

5. Method according to Claim 2 or 3, **characterized in that** the values (p, ΔV) which represent the hydraulic pressure and the displacement of pressure medium volume are compared with predefined threshold values (P_{Rmin}, ΔV_{S,max}), and the results of the comparison undergo a time-based pressure/volume correlation.

6. Method according to Claim 5, **characterized in that**, in the event of the hydraulic pressure set in the wheel brakes (7, 8) increasing above the predefined threshold value (P_{Rmin}), without the measure for the displacement of pressure medium reaching the threshold value (ΔV_{S,max}) ,a state is inferred in which the friction elements of the wheel brakes (7, 8) are bearing against the friction surfaces to which they are assigned.

7. Method according to Claim 5, **characterized in that**, if the measure for the displacement of pressure medium exceeds the (volume) threshold value (ΔV_{Smax}) and the hydraulic pressure set in the wheel brakes (7, 8) does not reach the (pressure) threshold value (P_{Rmin}) , an inadmissible movement travel of pistons provided in the wheel brakes (7, 8) is inferred, which, in the event of servicing work to the wheel brakes, poses a risk to the servicing personnel.

8. Method according to Claim 7, **characterized in that**, in the event of the inadmissible movement travel of the pistons being detected, a visual or audible warning is given.

## Revendications

1. Procédé de surveillance d'un équipement de freinage électrohydraulique pour véhicules automobiles, comprenant un maître-cylindre de frein (2) pouvant être actionné au moyen d'une pédale de frein (1), comprenant un simulateur (3) qui interagit avec la pédale de frein (1), comprenant au moins une source de pression pouvant être commandée par une unité électronique de commande et de régulation (16), laquelle est réalisée sous la forme d'un accumulateur à haute pression (21) qui peut être chargé au moyen d'une pompe (23) et dont la pression peut être appliquée aux freins de roue (7, 8) du véhicule automobile, lesquels peuvent être reliés de l'autre côté avec le maître-cylindre de frein (2) par le biais d'au moins une liaison hydraulique (5) qui peut être fermée au moyen d'une vanne de coupure (11), comprenant un dispositif (33) qui permet de détecter lorsque le conducteur souhaite ralentir, une vanne d'entrée (17, 18) à chaque fois branchée en amont des freins de roue (7, 8) et une vanne de sortie (27, 28), **caractérisé par** les étapes suivantes :
Désactivation d'une régulation électronique associée au processus de charge de l'accumulateur à haute pression et à exécuter par l'unité de commande et de régulation (16) ;
Fermeture d'une vanne de coupure (11) associée à un essieu du véhicule ;
Ouverture des vannes d'entrée (17, 18) associées à l'essieu du véhicule en vue d'un déplacement du volume de fluide sous pression dans les freins de roue(7, 8) de l'essieu du véhicule en déterminant en même temps des valeurs (p, ΔV) qui représentent la pression hydraulique imposée dans les freins de roue (7, 8) ainsi que le déplacement du fluide sous pression ; et
Interprétation des valeurs en vue d'évaluer l'état des freins de roue (7, 8).

2. Procédé selon la revendication 1, **caractérisé en ce que** le déplacement du fluide sous pression est effectué en ouvrant partiellement les vannes d'entrée (17, 18) lorsque l'accumulateur à haute pression (21) est chargé et que la mesure utilisée pour le déplacement du fluide sous pression est la diminution du volume de fluide sous pression contenu dans l'accumulateur à haute pression (21).

3. Procédé selon la revendication 1, **caractérisé en ce que** le déplacement du fluide sous pression dans les freins de roue lorsque l'accumulateur à haute pression est vide est effectué en commandant la pompe et en ouvrant complètement les vannes d'entrée (17, 18).

4. Procédé selon la revendication 3, **caractérisé en ce que** le déplacement du fluide sous pression est calculé approximativement dans l'unité de commande électronique par intégration du débit volumique de la pompe.

5. Procédé selon la revendication 2 ou 3, **caractérisé en ce que** les valeurs (p, ΔV), qui représentent la pression hydraulique ainsi que le déplacement du volume de fluide sous pression, sont comparées avec des valeurs de seuil (P_{Rmin,} AV_{S, max}) préalablement définies et les résultats de la comparaison sont soumis à une corrélation pression/volume dans le temps.

6. Procédé selon la revendication 5, **caractérisé en ce que** si la pression hydraulique imposée dans les freins de roue (7, 8) augmente au-dessus de la valeur de seuil (P_{Rmin}) préalablement définie, sans que la mesure du déplacement du fluide de pression n'atteigne la valeur de seuil (ΔV_{S, max}), on en déduit la présence d'un état dans lequel les éléments de friction des freins de roue (7, 8) sont appliqués sur les surfaces de friction qui leurs sont associées.

7. Procédé selon la revendication 5, **caractérisé en ce que** lorsque la mesure du déplacement du fluide de pression dépasse la valeur de seuil (de volume) (ΔV_{S, max}) et la pression hydraulique imposée dans les freins de roue (7, 8) n'atteint pas la valeur de seuil (de pression) (P_{Rmin}), on en déduit la présence d'une course de déplacement non autorisée du piston présent dans les freins de roue (7, 8), laquelle met en danger le personnel de maintenance lors de travaux de maintenance sur les freins de roue.

8. Procédé selon la revendication 7, **caractérisé en ce qu'**un avertissement visuel ou sonore a lieu en cas de détection d'une course de déplacement non autorisée du piston.
